# EUROPEAN PATENT SPECIFICATION

(11) **EP 4 207 374 B1**
(45) Date of publication and mention of the grant of the patent: **24.06.2026**
(21) Application number: 22856310.2
(22) Date of filing: 16.08.2022
(51) Int. Cl.: C01G 53/42, C01G 53/50, H01M 4/36, H01M 10/0525, H01M 4/131, H01M 4/58, H01M 4/485, H01M 4/1391, H01M 4/04, H01M 4/02, H01M 10/052, C01G 53/00, H01M 4/505, H01M 4/525, H01M 4/62

(54) **METHOD FOR MANUFACTURING POSITIVE ELECTRODE ACTIVE MATERIAL AND POSITIVE ELECTRODE ACTIVE MATERIAL FOR LITHIUM SECONDARY BATTERY**
VERFAHREN ZUR HERSTELLUNG EINES POSITIVELEKTRODENAKTIVMATERIALS UND POSITIVELEKTRODENAKTIVMATERIAL FÜR EINE LITHIUMSEKUNDÄRBATTERIE
PROCÉDÉ DE FABRICATION DE MATÉRIAU ACTIF D'ÉLECTRODE POSITIVE ET MATÉRIAU ACTIF D'ÉLECTRODE POSITIVE POUR BATTERIE SECONDAIRE AU LITHIUM

(30) Priority: 13.08.2021 KR 20210107659
(43) Date of publication of application: 05.07.2023
(73) Proprietor: LG CHEM, LTD., Yeongdeungpo-gu Seoul 07336 (KR)
(72) Inventor: KWAK, No-Woo, Daejeon 34122 (KR); KIM, Ji-Hye, Daejeon 34122 (KR); EOM, Jun-Ho, Daejeon 34122 (KR); LEE, Jun-Won, Daejeon 34122 (KR)
(74) Representative: Hoffmann Eitle
(86) International application number: PCT/KR2022/012210
(87) International publication number: WO 2023/018317

(56) References cited:
- KR-A- 20170 075 596
- KR-A- 20190 078 720
- KR-A- 20200 014 299
- KR-A- 20210 030 044
- KR-A- 20210 034 416
- KR-A- 20210 038 075
- KR-A- 20210 066 745
- US-A1- 2021 074 998
- MO WENBIN; WANG ZHIXING; WANG JIEXI; LI XINHAI; GUO HUAJUN; PENG WENJIE; YAN GUOCHUN: "Tuning the surface of LiNi0.8Co0.1Mn0.1O2 primary particle with lithium boron oxide toward stable cycling", CHEMICAL ENGENEERING JOURNAL, vol. 400, 9 June 2020 (2020-06-09), XP086247716, ISSN: 1385-8947, DOI: 10.1016/j.cej.2020.125820

## Description

### TECHNICAL FIELD

The present disclosure relates to a positive electrode active material for a lithium secondary battery and a method for preparing the same.

### BACKGROUND ART

Rechargeable lithium secondary batteries have been spotlighted as substitutes for fossil energy. Lithium secondary batteries have been used frequently for conventional hand-held devices, such as cellular phones, video cameras and power tools. However, recently, application of such lithium secondary batteries tends to be extended gradually to electrically driven vehicles (EV, HEV, PREV), large-capacity energy storage systems (ESS), uninterruptible power supply systems (UPS), or the like.

A lithium secondary battery has a structure including an electrode assembly of unit cells having a positive electrode plate and a negative electrode plate, each of which includes an active material coated on an electrode current collector, and a separator interposed between both electrodes; and an exterior material, i.e. a battery casing configured to receive and seal the electrode assembly together with an electrolyte. As a positive electrode material for such a lithium secondary battery, a lithium transition metal composite oxide has been used. Particularly, lithium cobalt oxide (LiCoO₂), lithium manganese oxide (LiMnO₂ or LiMn₂O₄), lithium iron phosphate (LiFePO₄) or LiNiO₂ has been used frequently. In addition, in order to improve low heat stability of LiNiO₂, while maintaining its excellent reversible capacity, there has been used nickel manganese-based lithium metal composite oxide in which nickel is partially substituted with manganese having high thermal stability, NCM-based lithium transition metal composite oxide in which nickel is partially substituted with manganese and cobalt, NCA-based lithium transition metal composite oxide in which nickel is partially substituted with cobalt and aluminum, or NCMA-based lithium transition metal composite oxide in which nickel is partially substituted with cobalt, manganese and aluminum.

Among such positive electrode active materials, the Ni-based lithium positive electrode material using Ni has been prepared by mixing a lithium source with a precursor, firing the resultant mixture at high temperature, and further firing the resultant product together with H₃BO₃ at low temperature so that the surface may be coated with B. However, the above-mentioned method is problematic in that it has a limitation in improvement of the high-temperature life characteristics and resistance increase of a positive electrode active material, and thus there is a need for improvement of the problem.

KR20210066745 A describes a positive electrode active material that includes a lithium transition metal oxide in the form of secondary particles formed by agglomeration of primary particles, and a coating film containing zirconium is formed on the surface of the secondary particles of the lithium transition metal oxide and at an interface between primary particles positioned inside the secondary particles.

KR 20170075596 A describes a lithium metal composite oxide comprising a doping element, and a boron (B) coating layer located on a surface of said lithium metal composite oxide.

US 2021/074998 A describes a positive active material for a rechargeable lithium battery that includes a first positive active material including a secondary particle including at least two agglomerated primary particles, where at least one part of the primary particles has a radial arrangement structure, as well as a second positive active material having a monolith structure, wherein the first and second positive active materials may each include nickel-based positive active materials and the surface of the second positive active material is coated with a boron-containing compound.

### DISCLOSURE

### Technical Problem

The present disclosure is designed to solve the problems of the related art, and therefore the present disclosure is directed to providing a positive electrode active material for a lithium secondary battery, improved in terms of high-temperature life characteristics and resistance increase, and a method for preparing the same.

### Technical Solution

To solve the above technical problem, in one aspect of the present disclosure, there is provided a positive electrode active material for a lithium secondary battery as defined in the appended claims and that is obtainable by the method defined in the appended claims, including a lithium boron compound coating layer on the surface of a powder of a positive electrode active material for a lithium secondary battery, wherein the coating layer shows a peak intensity ratio of peaks in the spectrum of Time-of-Flight Secondary Ion Mass Spectrometry (ToF-SIMS), equal to the peak intensity ratio of the corresponding peaks of LiBO₂ compound within a range of ±50% as follows:
a peak intensity ratio of the peak having the highest intensity among the peaks detected at a mass of 156.85-156.95 to the peak having the highest intensity among the peaks detected at a mass of 153.05-153.15 of 4.3±50% and a peak intensity ratio of the peak having the highest intensity among the peaks detected at a mass of 182.85-182.95 to the peak having the highest intensity among the peaks detected at a mass of 179.05-179.15 of 9.9±50%.

In another aspect of the present disclosure, there is provided a method for preparing a positive electrode active material for a lithium secondary battery, including: a first firing step of mixing a lithium source with a precursor and heat treating the resultant mixture to obtain a transition metal composite oxide represented by Chemical Formula 2 below; a second firing step of mixing the fired product obtained from the first firing step with a first B source and heat treating the resultant mixture to form a surface protective layer on the fired product; a water-washing step of removing unreacted lithium remaining on the surface of the fired product obtained from the second firing step; and a coating step of drying the product washed with water in the preceding step and heat treating the resultant product together with a second B source:

[Chemical Formula 2] Liₐ[Ni_{b}Co_{c}Mn_{d}Alₑ]_{1-f}M¹_{f}O₂

wherein M¹ represents at least one selected from the group consisting of Zr, W, Mg, Ce, Hf, Ta, La, Ti, Sr, Ba, F, P and S, 0.8 ≤ a ≤ 1.2, 0.7 ≤ b ≤ 0.99, 0 < c < 0.3, 0 < d < 0.3, 0.01 ≤ e ≤ 0.1, and 0 ≤ f ≤ 0.1.

The precursor is a Ni-rich lithium transition metal oxide having a nickel content of 70 mol% or more based on the total mole number of transition metals.

The heat treatment temperature in the first firing step may be 0.75-1.5 times of the heat treatment temperature in the second firing step.

The water-washing step may be carried out by mixing the fired product with water at a weight ratio of 50-200% and carrying out agitation.

The first B source or the second B source may be any one selected from H₃BO₃, H₄BO₄, B₂O₃, LiBO₂, Li₂B₄O₇, B₄C, AlBO₂ and AlB₂O₄, or a combination thereof.

The content of the first B source and the second B source are in such levels that the weight ratio of B/positive electrode active material equals to 200-5,000 ppm.

### Advantageous Effects

According to the present disclosure, there is provided a positive electrode active material for a lithium secondary battery, improved in terms of high-temperature life characteristics, resistance increase and output characteristics.

According to the method of the present disclosure, it is possible to obtain a positive electrode active material for a lithium secondary battery, improved in terms of high-temperature life characteristics and resistance increase by controlling the B coating/doping time point during the firing step.

In the method according to the present disclosure, the B source is added in the second firing step at a different time point from the addition of the lithium source, thereby providing an effect of improving the reactivity of the B source with the positive electrode active material.

According to the method of the present disclosure, the second firing step includes a process of B element coating/doping to form a surface protective layer on the fired product of positive electrode active material. Therefore, the B element coating layer formed during the firing can effectively inhibit surface deterioration of the positive electrode active material that may occur during the water-washing step.

According to the method of the present disclosure, the reactivity of the positive electrode active material surface with B is varied, when heat treating the dried water-washed product together with the second B source at low temperature, thereby providing the positive electrode active material with improved high-temperature life characteristics, resistance increase and low-temperature output characteristics.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a flow chart illustrating the method for preparing a positive electrode active material according to the present disclosure.
FIGS. 2 and 3 show the results of Time-of-Flight Secondary Ion Mass Spectrometry (ToF-SIMS) of Example and Comparative Examples 2 and 4.
FIG. 4 is a graph illustrating the capacity retention and resistance increase as a function of cycle number.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In the following description, reference will be made to the accompanying drawings forming a part of the present disclosure. The embodiments described in the detailed description, drawing and claims are not intended to be limiting of the present disclosure. Other embodiments and modifications may be made without departing from the scope of the present disclosure. The embodiments described generally herein and depicted in the drawings may be arranged, substituted, combined, separated and designed with various different constitutional elements. It will be understood that all of them are clearly considered herein.

Unless otherwise stated, all of the technological and scientific terms used herein have the same meanings as understood commonly by those skilled in the art to which the present disclosure belongs.

While the present disclosure will be described with respect to the specific embodiments, it will be apparent to those skilled in the art that various changes and modifications may be made without departing from the scope of the present disclosure. In addition to the above, it should be understood that other equivalents could be made without departing from the scope of the disclosure. Such modifications and changes also fall within the scope of the following claims. The scope of the present disclosure will be defined merely by the claims together with the whole range of equivalents qualified by the claims. It should be also understood that the present disclosure is not limited to particular embodiments which are variable. Further, it should be understood that the terminology used herein is for the purpose of describing particular embodiments only and is not intended to be limiting of the present disclosure.

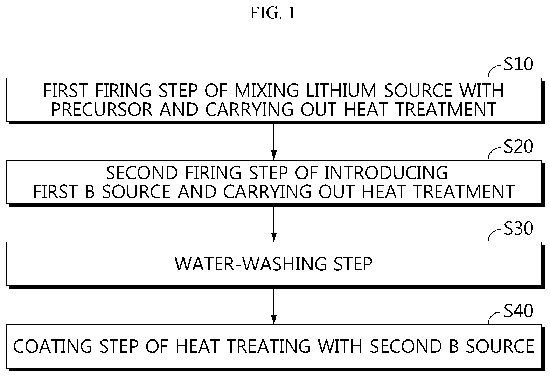

FIG. 1 is a flow chart illustrating the method for preparing a positive electrode active material according to the present disclosure. Hereinafter, the method for preparing a positive electrode active material according to the present disclosure will be explained in more detail with reference to FIG. 1.

First, the first firing step of mixing a lithium source with a precursor and carrying out heat treatment is carried out (step S10).

A positive electrode active material represented by Chemical Formula 2 for a lithium secondary battery is prepared through the first firing step (S10).

The precursor is a starting material, and may be prepared by mixing and reacting an aqueous solution of nickel compound, cobalt compound, manganese compound, or the like, with an alkaline solution to obtain a precipitate as a reaction product, and drying and heat treating the precipitate. For example, the precursor may be represented by the following Chemical Formula 1:

[Chemical Formula 1] Niₓ₁Co_{y1}Mn_{z1}Alₛ₁(OH)₂

wherein 0.7 ≤ x1 ≤ 0.99, 0 < y1 < 0.3, 0 < z1 < 0.3, and 0 ≤ s1 ≤ 0.1.

For example, the precursor may be one from which a Ni-rich lithium transition metal oxide is prepared, wherein the precursor may have a nickel content of 70 mol% or more based on the total mole number of transition metals.

The lithium source may be a lithium compound, such as Li₂CO₃ or LiOH·H₂O.

The fired product obtained through the first firing step (S10) is a lithium transition metal composite oxide represented by the following Chemical Formula 2:

[Chemical Formula 2] Liₐ[Ni_{b}Co_{c}Mn_{d}Alₑ]_{1-f}M¹_{f}O₂

wherein M¹ represents at least one selected from the group consisting of Zr, W, Mg, Ce, Hf, Ta, La, Ti, Sr, Ba, F, P and S, 0.8 ≤ a ≤ 1.2, 0.7 ≤ b ≤ 0.99, 0 < c < 0.3, 0 < d < 0.3, 0.01 ≤ e ≤ 0.1, and 0 ≤ f ≤ 0.1.

For example, the lithium transition metal composite oxide may be LiNi_{0.86}CO_{0.05}Mn_{0.07}Al_{0.02}O₂.

In the first firing step, no B source is mixed.

The heat treatment in the first firing step may be carried out at an oxygen concentration of 21-100%. The heat treatment temperature of the first firing step may be set to 0.75-1.5 times of the heat treatment temperature of the second firing step carried out after the first firing step. The heat treatment temperature may be varied suitably within the above-defined range depending on the content of each element in NCM. For example, the heat treatment in the first firing step may be carried out at 500-900°C. When the temperature is lower than 500°C, the reaction may not occur sufficiently. When the temperature is higher than 900°C, the positive electrode material may be thermally decomposed to cause degradation of performance.

Next, the second firing step of mixing the fired product obtained from the first firing step with the first B source and carrying out heat treatment to form a surface protective layer on the fired product is carried out (step S20). The heat treatment in the second firing step may be carried out by cooling the fired product after the heat treatment of the first firing step (step S10) and introducing the first B source to the fired product.

The method according to an embodiment of the present disclosure is characterized in that no B source is mixed in the first firing step (step S10), and then the B source is introduced subsequently twice in division. The first introduction time point is the second firing step (step S20). The B source introduced in the second firing step is referred to as the first B source.

The first B source is a coating/doping material, and may be any one selected from H₃BO₃, H₄BO₄, B₂O₃, LiBO₂, Li₂B₄O₇, B₄C, AlBO₂ and AlB₂O₄, or a combination thereof. The method for mixing the fired product obtained from the first firing step with the first B source may be carried out by a solid phase process or a liquid phase process. Such a solid phase or liquid phase process may include mixing, milling, spray drying, grinding, or the like. Preferably, a dry solid phase process is used.

The heat treatment in the second firing step may be carried out at an oxygen concentration of 21-100%. Similarly to the heat treatment in the first firing step, the heat treatment in the second firing step may be carried out at 500-900°C. When the heat treatment temperature is lower than 500°C, it is not possible to form a surface protective layer smoothly or homogeneously. When the heat treatment temperature is higher than 900°C, the positive electrode active material may not retain its original properties. The heat treatment temperature may be varied suitably within the above-defined range depending on the content of each element in NCM. However, as mentioned above, the heat treatment temperature in the first firing step is preferably 0.75-1.5 times of the heat treatment temperature of the second firing step. It is shown that when the heat treatment temperature in the first firing step is not within the above-defined range, high-temperature life characteristics are degraded even after the first B source is added and firing, water-washing and coating are performed in the second firing step. Therefore, the condition of the relationship between the heat treatment temperature in the first firing step and the heat treatment temperature in the second firing step is critical, since it is required to prevent degradation of high-temperature life characteristics.

In brief, the method according to an embodiment of the present disclosure is characterized in that firing is not carried out at once but is carried out twice (the first firing step and the second firing step) in division. In addition, the B source is not added in the first firing step but is added in the second firing step. The B source as a coating/doping material is not introduced in the first firing step, but is introduced merely in the second firing step. The first B source introduced in the second firing step allows the fired product to be coated/doped with B element to form a surface protective layer. One part of the first B source is incorporated into the fired product to perform doping, while the other part of the first B source is disposed on the surface of the fired product to form a B source coating layer, which functions as the surface protective layer.

According to the related art, the B source is introduced merely in the final step after the completion of firing to carry out coating. According to the present disclosure, the B source is added in the second firing step at a time point different from the introduction time of the lithium source. In this manner, it is possible to obtain an effect of improving the reactivity of the B source with the positive electrode active material. The surface protective layer formed in the second firing step inhibits surface deterioration of the positive electrode active material in the subsequent water-washing step (S30). Therefore, it is to be noted that the surface protective layer is already formed on the surface of the fired product before carrying out the water-washing step (S30) according to the method of the present disclosure, thereby inhibiting surface deterioration of the positive electrode active material surface in the water-washing step (S30).

The fired product obtained through the second firing step (S20) may be a lithium transition metal composite oxide represented by the following Chemical Formula 3:

[Chemical Formula 3] Liₐ[Ni_{b}Co_{c}Mn_{d}Alₑ]_{1-f}(B, M¹)_{f}O₂

wherein M¹ represents at least one selected from the group consisting of Zr, W, Mg, Ce, Hf, Ta, La, Ti, Sr, Ba, F, P and S, 0.8 ≤ a ≤ 1.2, 0.7 ≤ b ≤ 0.99, 0 < c < 0.3, 0 < d < 0.3, 0.01 ≤ e ≤ 0.1, and 0 ≤ f ≤ 0.1.

Then, a water-washing step of removing unreacted lithium remaining on the surface of the fired product obtained from the second firing step is carried out (step S30).

Since the positive electrode active material may include a lithium compound, such as LiOH, remaining thereon, such a water-washing step may be required. The water-washing step may be carried out by mixing the fired product with water at a weight ratio of 50-200% and carrying out agitation. During the washing, additives, such as LiOH and NaOH, may be introduced.

Since the surface protective layer is formed on the fired product of positive electrode active material by using a process of B element coating/doping in the second firing step, the B element coating layer formed during the firing may have an effect of inhibiting surface deterioration of the positive electrode active material that may occur in the water-washing step. As compared to the method of the related art in which the B source is introduced to carry out coating merely in the final step after the completion of firing, the method according to an embodiment of the present disclosure provides a significant effect of inhibiting surface deterioration of the positive electrode active material in the water-washing step. According to the related art, the surface of the fired product subjected to water-washing includes no surface protective layer as disclosed herein.

After that, a coating step of drying the washed product obtained from the water-washing step and carrying out heat treatment together with the second B source is carried out (step S40).

The B source is not mixed in the first firing step (step S10), but is added subsequently twice in division. The first introduction time point is the above-described second firing step (step S20), and the second introduction time point is the coating step (step S40). The B source introduced in the coating step is referred to as the second B source.

The second B source is a coating/doping material, and may be any one selected from H₃BO₃, H₄BO₄, B₂O₃, LiBO₂, Li₂B₄O₇, B₄C, AlBO₂ and AlB₂O₄, or a combination thereof. The method for mixing the water-washed and dried product with the second B source may be carried out by a solid phase process or a liquid phase process. Such a solid phase or liquid phase process may include mixing, milling, spray drying, grinding, or the like.

The heat treatment in the second firing step may be carried out at an oxygen concentration of 21-100%. The heat treatment in step S40 may be carried out at 200-400°C. When the heat treatment temperature is lower than 200°C, the positive electrode active material may not realize its capacity sufficiently. When the heat treatment temperature is higher than 400°C, high-temperature life characteristics may be degraded. Therefore, the heat treatment temperature in step S40 is preferably lower than 400°C.

The first source may be the same as or different from the second source. However, the content of the first B source and the second B source are in such levels that the weight ratio of B/positive electrode active material equals to 200-5,000 ppm.

When the weight ratio of B/positive electrode active material is smaller than 200 ppm, there is no effect of coating. When the weight ratio of B/positive electrode active material is larger than 5,000 ppm, an excessive amount of coating layer may be formed, which is not preferred in terms of capacity and resistance. When the washed and dried product is heat treated together with the second B source at low temperature, the reactivity of the positive electrode active material surface with B is varied, thereby improving the high-temperature life, resistance increase and low-temperature output characteristics. Since deterioration of the positive electrode active material surface is inhibited by the surface protective layer in the water-washing step (step S30), the reactivity of the second B source introduced in the coating step (S40) with the positive electrode active material surface is higher than the reactivity of the B source with the deteriorated positive electrode active material surface having no surface protective layer and subjected to water-washing.

The positive electrode active material that may be prepared by the above-described method according to the present disclosure has the following characteristics. The positive electrode active material according to the present disclosure includes a lithium boron compound coating layer on the surface of a powder of a positive electrode active material for a lithium secondary battery, wherein the coating layer shows a peak intensity ratio of two optional peaks in the spectrum of Time-of-Flight Secondary Ion Mass Spectrometry (ToF-SIMS), equal to the peak intensity ratio of the corresponding peaks of LiBO₂ compound within a range of ±50%.

The positive electrode active material according to the present disclosure may include a lithium boron compound coating layer on the surface of a powder of a positive electrode active material for a lithium secondary battery, wherein the coating layer may show a peak intensity ratio of two optional peaks in the spectrum of Time-of-Flight Secondary Ion Mass Spectrometry (ToF-SIMS), equal to the peak intensity ratio of the corresponding peaks of LiBO₂ compound within a range of ±50%.

For example, the positive electrode active material may be a NCM-based lithium transition metal composite oxide. Particularly, in the case of a Ni-rich lithium transition metal composite oxide having a nickel content of 70% or more, the reactivity with an electrolyte should be reduced in order to increase the stability under cycle operation environment. The positive electrode active material including the coating layer according to the present disclosure can reduce the reactivity with an electrolyte, and thus can reduce gas generation at high temperature.

The positive electrode active material including the coating layer according to the present disclosure provides improved high-temperature life, resistance increase and output characteristics.

Herein, the coating layer shows a peak intensity ratio of the peak having the highest intensity among the peaks detected at a mass of 156.85-156.95 to the peak having the highest intensity among the peaks detected at a mass of 153.05-153.15 of 4.3±50%, in the ToF-SIMS spectrum. The expression '4.3±50%' refers to a range of 4.3-2.15 (50% of 4.3) to 4.3+2.15, i.e. 2.15 to 6.45.

In addition, the coating layer shows a peak intensity ratio of the peak having the highest intensity among the peaks detected at a mass of 182.85-182.95 to the peak having the highest intensity among the peaks detected at a mass of 179.05-179.15 of 9.9±50%, in the ToF-SIMS spectrum. The expression '9.9±50%' refers to a range of 9.9-4.95 (50% of 9.9) to 9.9+4.95, i.e. 4.95 to 14.85.

In other words, the coating layer of the positive electrode active material according to the present disclosure shows peaks present in a specific mass range as determined by ToF-SIMS, wherein the peaks have a predetermined peak intensity ratio, and the peak intensity ratio is equal to the peak intensity ratio of the corresponding peaks in LiBO₂ compound within a range of ±50%. When the positive electrode active material is used for a positive electrode for a lithium secondary battery, it is possible to provide high output and high stability.

As a result, according to the present disclosure, it is possible to improve the high-temperature life, resistance increase and low-temperature output characteristics of a positive electrode active material by controlling the time point of B coating/doping during the firing step.

### MODE FOR DISCLOSURE

Hereinafter, the present disclosure will be explained in more detail with reference to Examples.

### Example:

First, LiOH·H₂O used as a lithium source and Ni_{0.88}Co_{0.05}Mn_{0.07}(OH)₂ + Al(OH)₃ used as a precursor were used and mixed in such a manner that the molar ratio of Li : transition metals (Ni, Co, Mn, Al) may be 1.03 : 1, and the resultant mixture was subjected to the first firing step at 700°C for 5 hours to obtain LiNi_{0.86}Co_{0.05}Mn_{0.07}Al_{0.02}O₂ as the first fired product. Next, the first fired product was mixed with the first B source, H₃BO₃, at a weight ratio of 100 : 0.86, and the resultant mixture was subjected to the second firing step at 750°C for 5 hours. The fired product was mixed with water at a weight ratio of 100 : 100, and agitation was carried out for 5 minutes. Then, the washed product was filtered by using a filter press and vacuum dried at 130°C. After that, the dried product was mixed with the second B source, H₃BO₃, at a weight ratio of 100 : 0.57, and the resultant mixture was heat treated at 300°C for 4 hours to obtain a positive electrode active material surface-coated with B.

### Comparative Example 1:

LiOH·H₂O used as a lithium source was mixed with Ni_{0.88}Co_{0.05}Mn_{0.07}(OH)₂ + Al(OH)₃ used as a precursor in such a manner that the molar ratio of Li : transition metals (Ni, Co, Mn, Al) may be 1.03 : 1, and the resultant mixture was subjected to the first firing step at 700°C for 5 hours to obtain the first fired product of LiNi_{0.86}Co_{0.05}Mn_{0.07}Al_{0.02}O₂. Next, no B source was added thereto, and the second firing step was carried out at 750°C for 5 hours.

### Comparative Example 2:

LiOH·H₂O used as a lithium source was mixed with Ni_{0.88}Co_{0.05}Mn_{0.07}(OH)₂ + Al(OH)₃ used as a precursor in such a manner that the molar ratio of Li : transition metals (Ni, Co, Mn, Al) may be 1.03:1, and the resultant mixture was subjected to the first firing step at 700°C for 5 hours to obtain the first fired product of LiNi_{0.86}Co_{0.05}Mn_{0.07}Al_{0.02}O₂. Next, no B source was added thereto, and the second firing step was carried out at 750°C for 5 hours. The fired product was mixed with water at a weight ratio of 100:100, and the resultant mixture was agitated for 5 minutes. Then, the washed product was filtered through a filter press, and vacuum drying was carried out at 130°C. After that, the dried product was mixed with H₃BO₃ at a weight ratio of 100:0.57, and heat treatment was carried out at 300°C for 4 hours.

### Comparative Example 3:

LiOH·H₂O used as a lithium source was mixed with Ni_{0.88}Co_{0.05}Mn_{0.07}(OH)₂ + Al(OH)₃ used as a precursor in such a manner that the molar ratio of Li : transition metals (Ni, Co, Mn, Al) may be 1.03 : 1, the resultant mixture was mixed with H₃BO₃ so that Ni_{0.88}Co_{0.05}Mn_{0.07}(OH)₂ and H₃BO₃ are mixed at a weight ratio of 100 : 0.91, and then the first firing step was carried out at 700°C for 5 hours, and the second firing step was carried out at 750°C for 5 hours.

### Comparative Example 4:

LiOH·H₂O used as a lithium source was mixed with Ni_{0.88}Co_{0.05}Mn_{0.07}(OH)₂ + Al(OH)₃ used as a precursor in such a manner that the molar ratio of Li : transition metals (Ni, Co, Mn, Al) may be 1.03 : 1, the resultant mixture was mixed with H₃BO₃ so that Ni_{0.88}Co_{0.05}Mn_{0.07}(OH)₂ and H₃BO₃ are mixed at a weight ratio of 100 : 0.91, and then the first firing step was carried out at 700°C for 5 hours, and the second firing step was carried out at 750°C for 5 hours. The fired product was mixed with water at a weight ratio of 100 : 100, and the resultant mixture was agitated for 5 minutes. Then, the washed product was filtered through a filter press, and vacuum drying was carried out at 130°C. After that, the dried product was mixed with H₃BO₃ at a weight ratio of 100 : 0.57, and heat treatment was carried out at 300°C for 4 hours.

### Comparative Example 5:

LiOH·H₂O used as a lithium source was mixed with Ni_{0.88}Co_{0.05}Mn_{0.07}(OH)₂ + Al(OH)₃ used as a precursor in such a manner that the molar ratio of Li : transition metals (Ni, Co, Mn, Al) may be 1.03 : 1, and the resultant mixture was subjected to the first firing step at 700°C for 5 hours to obtain the first fired product of LiNi_{0.86}Co_{0.05}Mn_{0.07}Al_{0.02}O₂. Then, the first fired product was mixed with H₃BO₃ at a weight ratio of 100 : 0.86, and the second firing step was carried out at 750°C for 5 hours.

In brief, the above Example and Comparative Examples are as follows.
Example: Li + NCM(OH)₂ + Al mixing → 700°C, the first firing step → positive electrode active material + the first B source mixing → 750°C, the second firing step → water-washing → drying, 130°C→ the second B source mixing and coating (300°C)
Comparative Example 1 (Positive electrode active material + no B source mixing, two-step firing): Li + NCM(OH)₂ + Al mixing → 700°C, the first firing step → 750°C, the second firing step
Comparative Example 2 (Positive electrode active material + no B source mixing, two-step firing): Li + NCM(OH)₂ + Al mixing → 700°C, the first firing step → 750°C, the second firing step → water-washing → drying, 130°C → H₃BO₃ mixing and coating (300°C)
Comparative Example 3 (mixing lithium source with B source in the first firing step): Li + NCM(OH)₂ + Al + H₃BO₃ mixing → 700°C, the first firing step → 750°C, the second firing step
Comparative Example 4 (mixing lithium source with B source in the firing step): Li + NCM(OH)₂ + Al + H₃BO₃ mixing → 700°C, the first firing step → 750°C, the second firing step → water-washing → drying, 130°C → H₃BO₃ mixing and coating (300°C)
Comparative Example 5: Li + NCM(OH)₂ + Al mixing → 700°C, the first firing step → positive electrode active material + H₃BO₃ mixing → 750°C, the second firing step

The test items include a time change test, an electrochemical data of a coin half-cell, a low-temperature output data of a mono-cell, a high-temperature life data of a mono-cell, and determination of peaks detected upon the B source addition through Time-of-Flight Secondary Ion Mass Spectrometry (ToF-SIMS).

### Results of Time-of-Flight Secondary Ion Mass Spectrometry (ToF-SIMS)

ToF-SIMS was carried out to identify the ingredients of the coating layer. In general, X-ray diffractometry (XRD) is used to determine the composition and crystal structure of a material. However, since the coating layer of the positive electrode active material has a thickness of several nanometers to several tens of nanometers, it is difficult to detect peaks by XRD. According to the present disclosure, a significantly thin coating layer were analyzed in terms of its ingredients through ToF-SIMS. After carrying out ToF-SIMS, it was shown that a lithium boron compound coating layer was formed additionally on the positive electrode active material surface. In other words, it was shown that a lithium boron compound was formed additionally by the method according to the present disclosure.

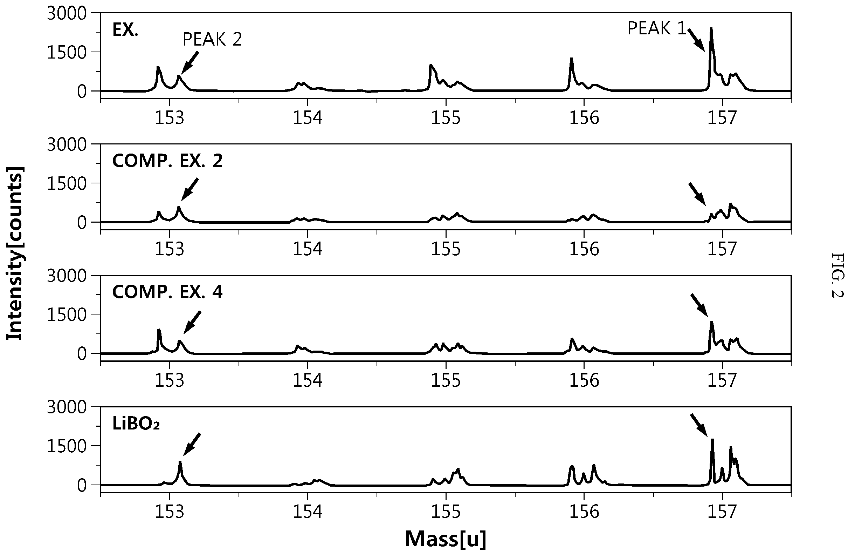

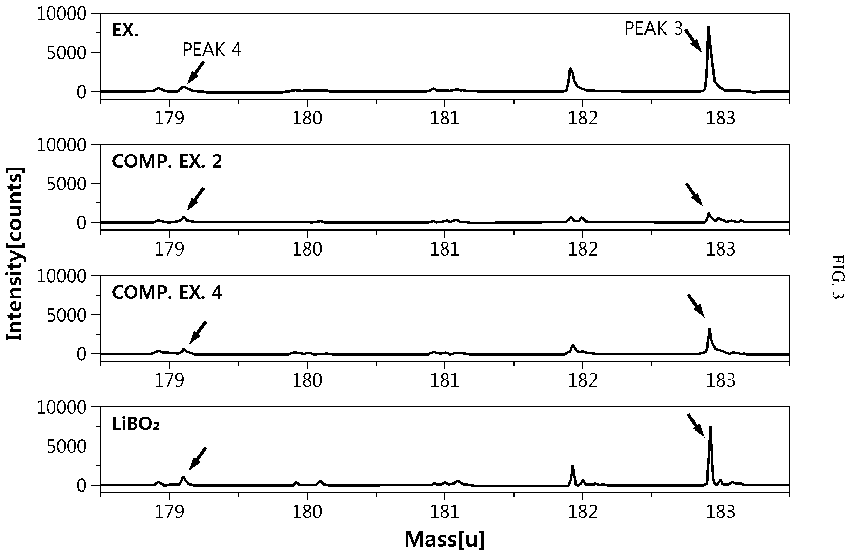

FIGS. 2 and 3 show the results of ToF-SIMS of Comparative Examples 2 and 4 and Example. For the purpose of comparison, the result of LiBO₂ is also shown.

Referring to FIG. 2, in Example, the peak (peak 1) having the highest intensity among the peaks detected at a mass of 156.85-156.95 is the peak detected at a mass of 156.9. In Example, the peak (peak 2) having the highest intensity among the peaks detected at a mass of 153.05-153.15 is the peak detected at a mass of 153.1. The mass values are those measured by calibration of the ToF-SIMS spectrum with Li⁺, C⁺, C2⁺ and C3⁺ peaks. In Example, the ratio of peak 1 to peak 2 is 4.3. Even when the detection error and other conditions in preparation are considered, according to the above Example, the ratio of the peak having highest intensity among the peaks detected at a mass of 156.85-156.95 to the peak having the highest intensity among the peaks detected at a mass of 153.05-153.15 may be 4.3±50%.

In Example, the peak intensity ratio of the peak detected at a mass of 156.9 to the peak detected at a mass of 153.1 is similar to the peak intensity ratio of the corresponding peak intensity (i.e. peak intensity ratio of peak 1 to peak 2 in LiBO₂ compound) of LiBO₂ compound within a range of ±50%. The term 'similar' means that the ratio of Example is the same as the ratio of LiBO₂ within a range of ±50%. In Comparative Examples 2 and 4, those peaks are observed in a different pattern. In comparative Examples 2 and 4, the ratio of peak 1 to peak 2 is 0.3 and 2.0, respectively.

Referring to FIG. 3, in Example, the peak (peak 3) having the highest intensity among the peaks detected at a mass of 182.85-182.95 is the peak detected at a mass of 182.9. In Example, the peak (peak 4) having the highest intensity among the peaks detected at a mass of 179.05-179.15 is the peak detected at a mass of 179.1. The mass values are those measured by calibration of the ToF-SIMS spectrum with Li⁺, C⁺, C2⁺ and C3⁺ peaks. In Example, the ratio of peak 3 to peak 4 is 9.9. Even when the detection error and other conditions in preparation are considered, according to the above Example, the ratio of the peak having highest intensity among the peaks detected at a mass of 182.85-182.95 to the peak having the highest intensity among the peaks detected at a mass of 179.05-179.15 may be 9.9±50%.

In Example, the peak intensity ratio of the peak detected at a mass of 182.9 to the peak detected at a mass of 179.1 is similar to the peak intensity ratio of the corresponding peak intensity (i.e. peak intensity ratio of peak 3 to peak 4 in LiBO₂ compound) of LiBO₂ compound within a range of ±50%. The term 'similar' means that the ratio of Example is the same as the ratio of LiBO₂ within a range of ±50%. In Comparative Examples 2 and 4, those peaks are observed in a different pattern. In comparative Examples 2 and 4, the ratio of peak 3 to peak 4 is 1.5 and 3.0, respectively.

According to the present disclosure, it can be seen that since the lithium boron compound having the above-mentioned peak intensity ratio characteristics is incorporated to the coating layer, high-temperature life characteristics and low-temperature output characteristics are improved.

### Method for Evaluating Characteristics of Coin Half-Cell

Each of the positive electrode active materials according to Example and Comparative Examples 1-5, carbon black as a conductive material and PVDF as a binder were mixed in N-methyl pyrrolidone as a solvent at a weight ratio of 96 : 2 : 2 to prepare a positive electrode slurry. The positive electrode slurry was applied onto one surface of an aluminum current collector, dried at 130°C and pressed to obtain a positive electrode. Lithium metal was used as a negative electrode. Then, a porous polyethylene separator was interposed between the positive electrode and the negative electrode to provide an electrode assembly, which, in turn, was received in a casing, and an electrolyte was injected into the casing to obtain a lithium secondary battery. Herein, the electrolyte was prepared by dissolving 1.0 M of lithium hexafluorophosphate (LiPF₆) in an organic solvent including ethylene carbonate/ethyl methyl carbonate/diethyl carbonate (EC/MC/DEC) mixed at a volume ratio of 3/4/3.

Each of the lithium secondary battery half-cell was charged at 0.1 C to 4.25 V at 25°C in a constant current-constant voltage (CC-CV) mode, and discharged at a constant current of 0.1 C to 3.0 V to carry out a charge/discharge test. In the test, the charge capacity, discharge capacity, efficiency and direct current internal resistance (DCIR) were determined.

### Method for Evaluating Characteristics of Mono-Cell

Each a positive electrode active material, a conductive material, a binder and an additive were mixed at a ratio of 97.5/1.0/1.35/0.15 to prepare a positive electrode slurry. The positive electrode slurry was coated on an aluminum current collector, and natural graphite was mixed with artificial graphite at a specific ratio to prepare a negative counter electrode. An electrolyte was prepared at a salt concentration of 0.7 M, and lithium bis(fluorosulfonyl)imide (LiFSI, 0.3 M) was added thereto in order to maintain the life. The electrolyte was injected in an amount of 100 µL, and a separator manufactured by our own company and prepared with an adequate size was interposed between the positive electrode and the negative electrode. The electrolyte was injected to the prepared mono-cell, charge/discharge cycles were carried out, and the initial gases were removed to prepare evaluation of the mono-cell.

The charge/discharge cycles were carried out at a temperature of 25°C. When the initial capacity was completed, the mono-cell was determined in terms of a drop in voltage (Δ voltage) and resistance, while being discharged at -10°C and at 2.0 C from SOC 10 to 0. To determine the high-temperature life characteristics, each mono-cell was charged at 45°C in a constant current mode at 0.5 C to 4.2 V, discharged at a constant current of 1.0 C to 3.0 V, charged at a constant current of 0.33 C to 4.2 V at 25°C when each of the 100^{th} 200^{th}, 300^{th} and 400^{th} cycles reached, and discharged at a constant current of 0.33 C to 3.0 V to carry out a charge/discharge test, and the capacity retention and an increase in resistance were measured.

### Test Results

The fired product of each positive electrode active material was determined in terms of improvement of a change with time. The change with time was evaluated as a change in Li₂CO₃ weight remaining on the surface. Table 1 shows the results of the time change test of Comparative Examples 1 and 5, wherein the weight ratio of Li₂CO₃/fired product was measured on the first day (0 day), after 1 day (1 day), after 2 days (2 day) and after 3 days (3 day).

**[Table 1]**

| Time change | Weight ratio of Li₂CO₃/fired product | | | |
|---|---|---|---|---|
| | 0 day | 1 day | 2 day | 3 day |
| Comp. Ex. 1 | 0.633 | 0.864 | 1.012 | 1.081 |
| Comp. Ex. 5 | 0.445 | 0.602 | 0.679 | 0.696 |

Referring to Table 1, Comparative 5 shows a smaller change with time as compared to Comparative Example 1. Therefore, it can be seen that Comparative Example 5 in which the second firing step is carried out with the B source added thereto provides a better result in terms of a change with time, as compared to Comparative Example 1 with no B source added thereto. According to the present disclosure, the second firing step is carried out with the B source added, and thus it is possible to accomplish improvement in terms of a change with time.

Table 2 shows the electrochemical data including the charge capacity, discharge capacity, efficiency and DCIR of each coin half-cell.

**[Table 2]**

| Electrochemical data of coin half-cell | 25°C 0.1 C/0.1 C | | | |
|---|---|---|---|---|
| | Charge capacity | Discharge capacity | Efficiency | DCIR |
| Example | 231.5 | 212.3 | 91.7 | 19.3 |
| Comp. Ex. 2 | 230.0 | 207.9 | 90.4 | 19.7 |
| Comp. Ex. 4 | 230.4 | 207.8 | 90.2 | 20.8 |

Referring to Table 2, Example according to the present disclosure shows a higher charge capacity, discharge capacity and efficiency, and a lower DCIR, as compared to Comparative Example 2 or 4.

Comparative Example 2 includes two-step firing, but no B source is mixed in the second firing step, unlike the present disclosure. Comparative Example 2 includes mixing the B source in the first firing step, not in the second firing step, unlike the present disclosure. Therefore, when the B source is not mixed in the first firing step but mixed in the second firing step according to the present disclosure, it is possible to improve the charge capacity, discharge capacity, efficiency and DCIR. As a result, it can be seen that it is possible to reduce the surface resistance of the positive electrode active material in the positive electrode of a lithium secondary battery by using the method according to the present disclosure. Particularly, in the case of Comparative Example 4 wherein the B source is introduced in the firing step, it can be seen that the positive electrode active material cannot realize its capacity but causes an increase in DCIR undesirably.

Table 3 shows the low-temperature output data of a mono-cell.

**[Table 3]**

| Low-temperature output data of mono-cell | Discharge at -10°C/2.0 C | | | | | |
|---|---|---|---|---|---|---|
| | 0-10 sec | | | 0-1350 sec | | |
| | ΔVoltage | Resistance (Ω) | Percentage* of resistance (%) | ΔVoltage | Resistance (Ω) | Percentage* of resistance (%) |
| Example | 0.212 | 27.107 | -11 | 0.263 | 33.58 | -10.5 |
| Comp. Ex. 2 | 0.242 | 30.463 | 0 | 0.298 | 37.52 | 0 |

Referring to Table 3, Example according to the present disclosure shows improved output characteristics, including a drop in voltage (Δvoltage) and resistance, as compared to Comparative Example 2.

Comparative Example 2 includes two-step firing, but the B source is not mixed in the second firing step, unlike the present disclosure. Therefore, when the B source is not mixed in the first firing step but mixed in the second according to the present disclosure, it is possible to improve the low-temperature output characteristics.

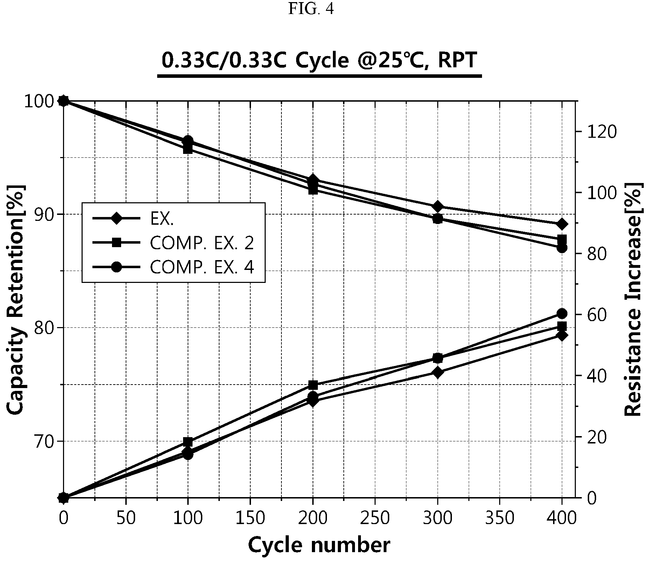

Table 4 shows data of high-temperature life of a mono-cell, including capacity retention and an increase in resistance, as determined every 100^{th} cycle, and FIG. 4 is a graph illustrating the capacity retention and an increase in resistance as a function of cycle number.

**[Table 4]**

| High-temperature life data of mono-cell | 25°C 0.33 C/0.33 C | | | | | | | |
|---|---|---|---|---|---|---|---|---|
| | 100^{th} cycle | | 200^{th} cycle | | 300^{th} cycle | | 400^{th} cycle | |
| | Capacity retention | Increase in resistance | Capacity retention | Increase in resistance | Capacity retention | Increase in resistance | Capacity retention | Increase in resistance |
| Example | 96.35 | 14.81 | 93.07 | 31.83 | 90.74 | 40.99 | 89.20 | 53.11 |
| Comp. Ex. 2 | 95.82 | 18.52 | 92.16 | 37.09 | 89.62 | 45.70 | 87.81 | 56.31 |
| Comp. Ex. 4 | 96.57 | 14.14 | 92.66 | 33.15 | 89.69 | 45.92 | 87.11 | 60.30 |

Referring to Table 4 and FIG. 4, it can be seen that Example according to the present disclosure shows a higher capacity retention and a smaller increase in resistance, as compared to Comparative Example 2 or 4.

Therefore, when the B source is not mixed in the first firing step but mixed in the second according to the present disclosure, it is possible to improve the high-temperature life characteristics. When putting the above results together, it can be seen that the coated positive electrode active material provides improved characteristics by carrying out the firing process in two steps and introducing the B source and lithium source at a different time point to improve the reactivity of the B source with the positive electrode active material.

## Claims

1. A method for preparing a positive electrode active material for a lithium secondary battery, comprising:
a first firing step of mixing a lithium source with a precursor and heat treating the resultant mixture to obtain a transition metal composite oxide represented by Chemical Formula 2 below (step S10);
a second firing step of mixing the fired product obtained from the first firing step with a first B source and heat treating the resultant mixture to form a surface protective layer on the fired product (step S20);
a water-washing step of removing unreacted lithium remaining on the surface of the fired product obtained from the second firing step (step S30); and
a coating step of drying the product washed with water in the preceding step and heat treating the resultant product together with a second B source (step S40):
[Chemical Formula 2] Liₐ[Ni_{b}Co_{c}Mn_{d}Alₑ]_{1-f}M¹_{f}O₂
wherein M¹ represents at least one selected from the group consisting of Zr, W, Mg, Ce, Hf, Ta, La, Ti, Sr, Ba, F, P and S, 0.8 ≤ a ≤ 1.2, 0.7 ≤ b ≤ 0.99, 0 < c < 0.3, 0 < d < 0.3, 0.01 ≤ e ≤ 0.1, and 0 ≤ f ≤ 0.1.

2. The method for preparing a positive electrode active material for a lithium secondary battery according to claim 1, wherein the precursor is represented by Chemical Formula 1 below:
[Chemical Formula 1] Niₓ₁Co_{y1}Mn_{z1}Alₛ₁(OH)₂
wherein 0.7 ≤ x1 ≤ 0.99, 0 < y1 < 0.3, 0 < z1 < 0.3, and 0 ≤ s1 ≤ 0.1.

3. The method for preparing a positive electrode active material for a lithium secondary battery according to claim 1, wherein the heat treatment temperature in the first firing step is 0.75-1.5 times of the heat treatment temperature in the second firing step.

4. The method for preparing a positive electrode active material for a lithium secondary battery according to claim 1, wherein the water-washing step is carried out by mixing the fired product with water at a weight ratio of 50-200% and carrying out agitation.

5. The method for preparing a positive electrode active material for a lithium secondary battery according to claim 1, wherein the first B source or the second B source is any one selected from H₃BO₃, H₄BO₄, B₂O₃, LiBO₂, Li₂B₄O₇, B₄C, AlBO₂ and AlB₂O₄, or a combination thereof.

6. The method for preparing a positive electrode active material for a lithium secondary battery according to claim 1, wherein the content of the first B source and the second B source are in such levels that the weight ratio of B/positive electrode active material equals to 200-5,000 ppm.

7. A positive electrode active material for a lithium secondary battery obtainable by the method according to claim 1, comprising a lithium boron compound coating layer on the surface of a powder of a positive electrode active material for a lithium secondary battery, **characterized in that** the coating layer shows a peak intensity ratio of peaks in the spectrum of Time-of-Flight Secondary Ion Mass Spectrometry (ToF-SIMS), equal to the peak intensity ratio of the corresponding peaks of LiBO₂ compound within a range of ±50% as follows:
a peak intensity ratio of the peak having the highest intensity among the peaks detected at a mass of 156.85-156.95 to the peak having the highest intensity among the peaks detected at a mass of 153.05-153.15 of 4.3±50%, and a peak intensity ratio of the peak having the highest intensity among the peaks detected at a mass of 182.85-182.95 to the peak having the highest intensity among the peaks detected at a mass of 179.05-179.15 of 9.9±50%.

## Patentansprüche

1. Verfahren zur Herstellung eines positiven Elektrodenaktivmaterials für eine Lithiumsekundärbatterie, umfassend:
einen Brennschritt zum Mischen einer Lithiumquelle mit einem Vorläufer und Wärmebehandeln der resultierenden Mischung unter Erhalt eines durch die nachstehende chemische Formel 2 dargestellten Übergangsmetallmischoxids (Schritt S10),
einem zweiten Brennschritt zum Mischen des im ersten Brennschritt erhaltenen gebrannten Produkts mit einer ersten B-Quelle und Wärmebehandeln der resultierenden Mischung, um eine Oberflächenschutzschicht auf dem gebrannten Produkt zu bilden (Schritt S20),
einen Wasserwaschschritt zum Entfernen von nichtumgesetztem Lithium, das auf der Oberfläche des im zweiten Brennschritt erhaltenen gebrannten Produkts verblieben ist (Schritt S30), und
einen Beschichtungsschritt zum Trocknen des Produkts, das mit Wasser im vorherigen Schritt gewaschen wurde, und Wärmebehandeln des resultierenden Produkts zusammen mit einer zweiten B-Quelle (Schritt S40):
[Chemische Formel 2] Liₐ[Ni_{b}CO_{C}Mn_{d}Alₑ]_{1-f}M¹_{f}O₂
worin M¹ mindestens eines, ausgewählt aus der Gruppe, bestehend aus Zr, W, Mg, Ce, Hf, Ta, La, Ti, Sr, Ba, F, P und S, darstellt, 0,8 ≤ a ≤ 1,2, 0,7 ≤ b ≤ 0,99, 0 < c < 0, 3, 0 < d < 0,3, 0,01 ≤ e ≤ 0,1 und 0 ≤ f ≤ 0,1 ist.

2. Verfahren zur Herstellung eines positiven Elektrodenaktivmaterials für eine Lithiumsekundärbatterie gemäß Anspruch 1, wobei der Vorläufer durch die nachstehende chemische Formel 1 dargestellt ist:
[Chemische Formel 1] Niₓ₁CO_{y1}Mn_{z1}Alₛ₁(OH)₂
worin 0,7 ≤ x1 ≤ 0,99, 0 < y1 < 0,3, 0 < z1 < 0,3 und 0 ≤ s1 ≤ 0,1 ist.

3. Verfahren zur Herstellung eines positiven Elektrodenaktivmaterials für eine Lithiumsekundärbatterie gemäß Anspruch 1, wobei die Wärmebehandlungstemperatur im ersten Brennschritt das 0,75-1,5-fache der Wärmebehandlungstemperatur im zweiten Brennschritt beträgt.

4. Verfahren zur Herstellung eines positiven Elektrodenaktivmaterials für eine Lithiumsekundärbatterie gemäß Anspruch 1, wobei der Wasserwaschschritt durch Mischen des gebrannten Produkts mit Wasser bei einem Gewichtsverhältnis von 50-200 % und Durchführen eines Rührvorgangs durchgeführt wird.

5. Verfahren zur Herstellung eines positiven Elektrodenaktivmaterials für eine Lithiumsekundärbatterie gemäß Anspruch 1, wobei die erste B-Quelle oder die zweite B-Quelle eine, ausgewählt aus H₃BO₃, H₄BO₄, B₂O₃, LiBO₂, Li₂B₄O₇, B₄C, AlBO₂ und AlBO₄, oder eine Kombination davon ist.

6. Verfahren zur Herstellung eines positiven Elektrodenaktivmaterials für eine Lithiumsekundärbatterie gemäß Anspruch 1, wobei der Gehalt der ersten B-Quelle und der zweiten B-Quelle auf solchen Niveaus ist, dass das Gewichtsverhältnis B/positives Elektrodenaktivmaterial 200-5.000 ppm entspricht.

7. Positives Elektrodenaktivmaterial für eine Lithiumsekundärbatterie, erhältlich durch das Verfahren gemäß Anspruch 1, umfassend eine Lithium-Bor-Verbindungsbeschichtungsschicht auf der Oberfläche eines Pulvers aus einem positiven Elektrodenaktivmaterial für eine Lithiumsekundärbatterie, **dadurch gekennzeichnet, dass** die Beschichtungsschicht ein Peakintensitätsverhältnis von Peaks im Flugzeit-Sekundärionen-Massenspektrometrie (ToF-SIMS)-Spektrum aufweist, das dem Peakintensitätsverhältnis der entsprechenden Peaks der LiBO₂-Verbindung innerhalb eines Bereichs von ±50 % wie folgt entspricht:
ein Peakintensitätsverhältnis des Peaks mit der höchsten Intensität unter den Peaks, die bei einer Masse von 156,85-156,95 detektiert werden, zu dem Peak mit der höchsten Intensität unter den Peaks, die bei einer Masse von 153,05-153,15 detektiert werden, von 4,3±50 % und
ein Peakintensitätsverhältnis des Peaks mit der höchsten Intensität unter den Peaks, die bei einer Masse von 182,85-182,95 detektiert werden, zu dem Peak mit der höchsten Intensität unter den Peaks, die bei einer Masse von 179,05-179,15 detektiert werden, von 9,9±50 %.

## Revendications

1. Procédé destiné à préparer un matériau actif d'électrode positive pour une batterie secondaire au lithium, comprenant :
une première étape de cuisson consistant à mélanger une source de lithium avec un précurseur et à soumettre le mélange résultant à un traitement thermique pour obtenir un oxyde composite de métal de transition représenté par la Formule chimique 2 ci-dessous (étape S10) ;
une seconde étape de cuisson consistant à mélanger le produit cuit obtenu à partir de la première étape de cuisson avec une première source B et à soumettre le mélange résultant à un traitement thermique pour former une couche protectrice de surface sur le produit cuit (étape S20) ;
une étape de lavage à l'eau consistant à enlever le lithium n'ayant pas réagi restant sur la surface du produit cuit obtenu à partir de la seconde étape de cuisson (étape S30) ; et
une étape de revêtement consistant à sécher le produit lavé à l'eau à l'étape précédente et à soumettre le produit résultant, conjointement avec une seconde source B, à un traitement thermique (étape S40) :
[Formule chimique 2] Liₐ[Ni_{b}Co_{c}Mn_{d}Alₑ]_{1-f}M¹_{f}O₂
dans lequel M¹ représente au moins un élément sélectionné dans le groupe consistant en Zr, W, Mg, Ce, Hf, Ta, La, Ti, Sr, Ba, F, P et S, 0,8 ≤ a ≤ 1,2, 0,7 ≤ b ≤ 0,99, 0 < c < 0,3, 0 < d < 0,3, < 0,01 ≤ e ≤ 0,1 et 0 ≤ f ≤ 0,1.

2. Procédé de préparation d'un matériau actif d'électrode positive pour une batterie secondaire au lithium selon la revendication 1, dans lequel le précurseur est représenté par la Formule chimique 1 ci-dessous :
[Formule chimique 1] Ni_{x₁}Co_{y₁}Mn_{z1}Al_{s₁(}OH)₂
dans lequel 0,7 ≤ x1 ≤ 0,99, 0 ≤ y1 ≤ 0,3, 0 ≤ z1 ≤ 0,3 et 0 ≤ s1 ≤ 0,1.

3. Procédé de préparation d'un matériau actif d'électrode positive pour une batterie secondaire au lithium selon la revendication 1, dans lequel la température de traitement thermique dans la première étape de cuisson est de 0,75 à 1,5 fois la température de traitement thermique dans la seconde étape de cuisson.

4. Procédé de préparation d'un matériau actif d'électrode positive pour une batterie secondaire au lithium selon la revendication 1, dans lequel l'étape de lavage à l'eau est réalisée par mélange du produit cuit avec de l'eau à un rapport pondéral de 50 à 200 % et par la réalisation d'une agitation.

5. Procédé de préparation d'un matériau actif d'électrode positive pour une batterie secondaire au lithium selon la revendication 1, dans lequel la première source B ou la seconde source B est un quelconque composé sélectionné parmi H₃BO₃, H₄BO₄, B₂O₃, LiBO₂, Li₂B₄O₇, B₄C, AlBO₂ et AlB₂O₄, ou une combinaison de ceux-ci.

6. Procédé de préparation d'un matériau actif d'électrode positive pour une batterie secondaire au lithium selon la revendication 1, dans lequel les teneurs en première source B et en seconde source B sont à des niveaux tels que le rapport pondéral de B/matériau actif d'électrode positive est égal à 200 à 5 000 ppm.

7. Matériau actif d'électrode positive pour une batterie secondaire au lithium pouvant être obtenu par le procédé selon la revendication 1, comprenant une couche de revêtement de composé de lithium et de bore sur la surface d'une poudre d'un matériau actif d'électrode positive pour une batterie secondaire au lithium, **caractérisé en ce que** la couche de revêtement présente un rapport d'intensité de pic, pour les pics dans le spectre de spectrométrie de masse d'ions secondaires à temps de vol (ToF-SIMS), égal au rapport d'intensité de pic pour les pics correspondants du composé LiBO₂ dans une plage de ±50 % comme suit :
un rapport d'intensité de pic pour le pic ayant l'intensité la plus élevée parmi les pics détectés à une masse comprise de 156,85 à 156,95 par rapport au pic ayant l'intensité la plus élevée parmi les pics détectés à une masse comprise de 153,05 à 153,15 de 4,3±50 %, et un rapport d'intensité de pic pour le pic ayant l'intensité la plus élevée parmi les pics détectés à une masse de 182,85 à 182,95 par rapport au pic ayant l'intensité la plus élevée parmi les pics détectés à une masse comprise entre 179,05 et 179,15 de 9,9±50 %.
